# EUROPÄISCHE PATENTSCHRIFT

(11) **EP 2 299 773 B1**
(45) Veröffentlichungstag und Bekanntmachung des Hinweises auf die Patenterteilung: **24.10.2012**
(21) Anmeldenummer: 10181831.8
(22) Anmeldetag: 13.11.2006
(51) Int. Cl.: H04W 88/02, H04M 1/725

(54) **Steuerung von Geräten über das Mobilfunknetz**
Control of devices by use of the mobile communications network
Contrôle de dispositifs par le réseau radio mobile

(30) Priorität: 30.11.2005 DE 102005057557
(43) Veröffentlichungstag der Anmeldung: 23.03.2011
(62) Teilanmeldung aus: 06123916.6
(73) Patentinhaber: Vodafone Holding GmbH, 40213 Düsseldorf (DE)
(72) Erfinder: Ackermann, Thomas, 41540, Dormagen (DE)
(74) Vertreter: Weisse, Renate

(56) Entgegenhaltungen:
- WO-A-98/49818
- WO-A-98/58510
- WO-A-03/038534
- WO-A-2004/051971
- US-B1- 6 223 026

## Beschreibung

### Technisches Gebiet

Die Erfindung betrifft eine Chipkarte, insbesondere eine SIM-Karte, mit einem integrierten Speicher sowie einen Daten- und Steuerbus mit einem Kontaktbereich zum Austauschen von digitalen Daten über ein Chipkartenlesegerät mit einem Mobilfunkendgerät, wobei die Chipkarte einen Prozessor zum Steuern weiterer Geräte und/oder Geräteanordnungen über das Mobilfunkendgerät enthält. Ferner betrifft die Erfindung ein Mobilfunkendgerät mit einem Chipkartenlesegerät, mit dem der Speicher einer Chipkarte, insbesondere einer SIM-Karte, gelesen oder beschrieben werden kann, und die Chipkarte einen Prozessor zum Steuern weiterer Geräte und/oder Geräteanordnungen über das Mobilfunkendgerät aufweist. Weiterhin betrifft die Erfindung eine Anordnung von wenigstens zwei Endgeräten zum Steuern des einen Endgeräts durch das andere Endgerät, wobei
a) das erste Endgerät eine Sende-/Empfangseinheit und das zweite Endgerät eine Sende-/Empfangseinheit enthält,
b) das erste Endgerät ein Chipkartenlesegerät enthält, welches eine Chipkarte, insbesondere eine SIM-Karte, lesen oder beschreiben kann,
c) ein Netzwerk oder eine sonstige Verbindung, über welches das erste Endgerät mit dem zweiten Endgerät Daten mittels der Sende- bzw. Empfangseinheit austauscht,
d) die Chipkarte einen Prozessor und ein Anweisungsskript in einem Speicher zum Steuern des zweiten Endgeräts über das erste Endgerät aufweist.

### Stand der Technik

Es sind Chipkarten, insbesondere SIM-Karten bekannt, die wenigstens einen Datenspeicher enthalten. Der Datenspeicher kann lesbar und beschreibbar, aber auch nur lesbar ausgebildet sein. Dieser Datenspeicher wird mit einem Chipkartenleser bzw. -schreiber ausgelesen oder beschrieben. Die Chipkarte weist dazu geeignete Kontaktflächen auf, um mit komplementären Kontakten des Chipkartenlesers eine Verbindung für den Zugriff für ein Gerät herzustellen.

Der Datenspeicher verfügt über ein entsprechend geeignetes Bussystem mit Daten- und Steuerleitungen. Der Chipkartenleser ist üblicherweise wiederum Bestandteil eines Endgeräts, welches die in der Chipkarte gespeicherten Daten verarbeitet. Das Endgerät ist daher eine geeignete prozessorgesteuerte Einheit. Die Daten sind insbesondere Tabellen oder ausführbare Programme, wobei die Programme von dem Prozessor des Endgeräts ausgeführt werden.

In Mobilfunkendgeräten, insbesondere Telematikgeräten, aber auch Bankkarten oder Festnetztelefonen kommen solche Chipkarten zum Einsatz. Über den Chipkartenleser können die prozessorgesteuerten Endgeräte auf die Daten aus dem Speicher der Chipkarte zugreifen und diese verarbeiten. Bei der Identifizierung und Authentifizierung und sonstigen Verschlüsselungen kommen spezielle Formeln bzw. Algorithmen zum Einsatz, die einem Missbrauch einer Chipkarte vorbeugen. Diese Berechnungen werden mit einem Prozessor durchgeführt.

Die Offenlegungsschrift DE 34 12 663 offenbart ein Chipkartensystem mit Chipkarten, welche einen Prozessor enthalten. Die Chipkarten dienen zur Verwendung als Geldersatz, als Ausweis beziehungsweise als Speichermedium. Eine einzige Chipkarte kann dabei nacheinander für unterschiedliche Anwendungsfälle benutzbar sein. Für die unterschiedlichen Anwendungsfälle sind unterschiedliche Bereiche eines in dem Chip integrierten Speichers oder einer Funktionseinheit vorgesehen. Für die Auswahl der unterschiedlichen Bereiche im Chip ist eine Auswahlschaltung in dem Chip vorgesehen, für die eine bestimmte Auswahlprozedur festgelegt ist, durch welche sichergestellt werden kann, dass die für den betreffenden Anwendungsfall relevanten Bereiche und nur diese zugeordnet werden. Für spezielle Anwendungsfälle ist als Funktionseinheit ein Prozessor in den Chip eingebaut, durch den die in den unterschiedlichen speziellen Anwendungsfällen erforderlichen Prozesse abgewickelt werden. Die Funktionseinheiten befinden sich dabei auf der Chipkarte, um sie für multifunktionale Anwendungen nutzen zu können.

Als Nachteil erweist sich, dass der Prozessor des Endgeräts zahlreiche Aufgaben übernehmen muss, die zur Auslastung des Endgeräts führen, bzw. zusätzliche Prozessorkapazitäten bzw. weitere Geräte und/oder Geräteanordnungen erfordern. Es werden daher bestimmte Aufgaben über Vernetzungen auf andere Rechner ausgelagert, die aus ökonomischen Gründen oft zentral für mehrere Endgeräte ausgeführt werden. Dadurch werden insbesondere die Netzwerkkapazitäten durch die Datenübertragungen nachteilig reduziert. Es ist daher seitens der Netzbetreiber wünschenswert wieder Steuerungsaufgaben, die als Dienst bisher beispielsweise durch zentrale Netzrechner übernommen wurden, auf die Endgeräte zu übertragen. Die Endgeräte stoßen bzgl. der Prozessorauslastung dabei jedoch recht schnell an ihre Rechenkapazitätsgrenze.

Die WO 98/58510 A1 beschreibt ein Mobilfunkendgerät mit einer SIM-Karte, welche über Datenverarbeitungsmittel verfügt. Als Datenverarbeitungsmittel sind ein Speicher, ein Mikrokontroller und ein Kommunikationskontroller in der SIM-Karte vorgesehen. Über eine in dem Mobilfunkendgerät enthaltene, drahtlose Schnittstelle mit kurzer Reichweite, (z.B. eine infrarote, induktive oder elektromagnetische Schnittstelle) wird eine direkte Kommunikation zwischen einem externen Gerät und der SIM-Karte ohne Nutzung des Mobilfunknetzes ermöglicht. Auf diese Weise sind eine Steuerung des externen Geräts durch die SIM-Karte und ein Datenaustausch zwischen SIM-Karte und externem Gerät ohne ein Mobilfunknetz durchführbar. Als externes Gerät wird beispielsweise ein Bankautomat oder eine Kasse in einem Ladengeschäft genannt.

Die WO 03/038534 A1 offenbart ein System, bei dem ein Zentralserver mit einer Vielzahl von RTU's (remote terminal units) verbunden ist. Die Verbindung zwischen

RTU's und Zentralserver erfolgt entweder über ein Modem oder über das Mobilfunknetz unter Benutzung von SMS bzw. GPRS, wobei der Zentralserver auf die SIM-Karte des RTU's zugreift. Die SIM-Karte des RTU's enthält außerdem einen Prozessor. Das RTU verfügt über eine Mehrzahl von Schnittstellen zur Kommunikation und zur Steuerung von externen, an diese Schnittstellen angeschlossene Geräte. Die RTU's agieren also passiv, da der aktive Part von dem Zentralserver übernommen wird.

Die WO 2004/051971 A1 zeigt ein Mobilfunktelefon ohne fest verbauten Mikroprozessor auf. Der Mikroprozessor ist vielmehr in einer entfernbaren SIM-Karte vorgesehen. Durch Einsetzen der SIM-Karte mit dem Mikroprozessor in einen SIM-Karten-Halter des Mobilfunktelefons wird über entsprechende Kontakte das Mobilfunktelefon mit dem Mikroprozessor verbunden. Der Mikroprozessor ermöglicht die üblichen Funktionen eines Mobilfunktelefons.

### Offenbarung der Erfindung

Aufgabe der Erfindung ist es, Endgeräte mit Chipkarten zu entlasten und Funktionen und/oder sonstige Dienste des Endgeräts auszulagern bzw. zusätzliche Geräte und/oder Geräteanordnungen zu reduzieren, welche ansonsten erforderlich wären.

Erfindungsgemäß wird die Aufgabe dadurch gelöst, dass bei einer Chipkarte der eingangs genannten Art die Chipkarte und der Prozessor zum Steuern eines Kühlschranks, eines Fernsehers, einer Beleuchtung und/oder einer Heizung über ein Mobilfunknetz ausgebildet sind, wobei der Kühlschrank, der Fernseher, die Beleuchtung oder die Heizung über ein Mobilfunkendgerät oder über ein Modem und ein Festnetz mit dem Mobilfunknetz gekoppelt sind, und wobei die Chipkarte so ausgebildet ist, dass die durch eine USB-kabelverbindung für die Chipkarte übertragenen Programme und Daten, welche von dem Prozessor der Chipkarte zur Steuerung des Kühlschranks, des Fernsehers, der Beleuchtung und/oder der Heizung abgearbeitet werden, in den Speicher der chipkarte übertragen werden.

Die Aufgabe wird weiterhin durch ein Mobilfunkendgerät mit einem Chipkartenlesegerät, mit dem der Speicher einer Chipkarte gelesen oder beschrieben werden kann, der eingangsgenannten Art gelöst, bei dem die Chipkarte und der Prozessor zum Steuern eines Kühlschranks, eines Fernsehers, einer Beleuchtung und/oder einer Heizung über ein Mobilfunknetz ausgebildet sind, wobei der Kühlschrank, der Fernseher, die Beleuchtung oder die Heizung über ein Mobilfunkendgerät oder über ein Modem und ein Festnetz mit dem Mobilfunknetz gekoppelt sind, und wobei eine USB-kabelverbindung für die Chipkarte zum Übertragen von Programmen und Daten, welche von dem Prozessor der Chipkarte zur Steuerung zur Steuerung des Kühlschranks, des Fernsehers, der Beleuchtung und/oder der Heizung abgearbeitet werden, vorgesehen ist.

Nach der Erfindung wird die Aufgabe ebenfalls dadurch gelöst, dass bei einer Anordnung von wenigstens zwei Endgeräten zum Steuern des einen Endgeräts durch das andere Endgerät der eingangs genannten Art,
e) das Netzwerk als ein Mobilfunknetz und das erste Endgerät als Mobilfunkendgerät ausgebildet ist,
f) das zweite Endgerät ein Kühlschrank, ein Fernseher, eine Beleuchtung oder eine Heizung ist, wobei der Kühlschrank, der Fernseher, die Beleuchtung oder die Heizung über ein Mobilfunkendgerät oder über ein Modem und ein Festnetz mit dem Mobilfunknetz gekoppelt ist,
g) die Chipkarte und der Prozessor zum Steuern des Kühlschranks, des Fernsehers, der Beleuchtung und/oder der Heizung über ein Mobilfunknetz ausgebildet sind, und
h) eine USB-kabelverbindung für die Chipkarte zum Übertragen von Programmen und Daten, welche von dem Prozessor der Chipkarte zur Steuerung des Kühlschranks, des Fernsehers, der Beleuchtung oder der Heizung abgearbeitet werden, vorgesehen ist.

Durch die Verwendung eines Prozessors auf der Chipkarte, der Steuerungsaufgaben für externe Geräte übernehmen kann, wird das Endgerät von solchen Aufgaben befreit. Damit wird zum einen das Netz entlastet, da diese Steuerungsaufgaben nicht auf einen Netzrechner übertragen werden. Zum anderen wird das steuernde Endgerät entlastet, da die Steuerungsaufgaben auch nicht von diesem übernommen werden. Das steuernde Endgerät sowie das übertragende Netz dienen nun lediglich als Vermittlungsvorrichtungen. Es können dabei auch Aufgaben von mehreren Geräten oder Geräteanordnungen übernommen werden.

Ein weiterer Vorteil, der sich durch die Verwendung eines Prozessors auf der Chipkarte ergibt, besteht darin, dass die Steuerungsaufgaben unabhängig von dem jeweiligen Endgerät, in das die Chipkarte eingesetzt wird, vorgenommen werden können.

Bei der erfindungsgemäßen Chipkarte ist das Endgerät als Mobilfunkendgerät vorgesehen. Dadurch wird eine erhebliche Mobilität des Endgeräts erreicht. Auch das erfindungsgemäße Endgerät ist als Mobilfunkendgerät ausgestaltet. Damit ist gewährleistet, dass die Steuerung des Endgeräts aus der Ferne vorgenommen werden kann. Die Steuerung ist somit im Rahmen des Mobilfunknetzes mobil möglich.

Bei der erfindungsgemäßen Anordnung ist das Netzwerk als ein Mobilfunknetz und wenigstens eines der Endgeräte als Mobilfunkendgerät ausgebildet. Dadurch wird die Mobilität der Endgeräte als besonderes Merkmal herausgestellt.

Eine vorteilhafte Ausgestaltung der erfindungsgemäßen Chipkarte besteht darin, dass der Prozessor zur Steuerung des Endgeräts ausgebildet ist. Durch diese Maßnahme ist es nun nicht mehr unbedingt notwendig, dass das Endgerät bzw. weitere Geräte und/oder Geräteanordnungen selbst einen Prozessor aufweist bzw. aufweisen. Die Endgeräte können auf diese Weise extrem einfach ausgebildet sein. Sie bilden dadurch lediglich eine "Hülle", in die der Teilnehmer seine Rechnereinheit, welche durch die Chipkarte 10 gebildet wird, einführt.

Das Endgerät, in das die steuernde Chipkarte eingeführt werden kann, kann auch als Festnetzgerät, welches in einem entsprechenden Netzwerk eingebunden ist, verwendet werden.

Eine besondere Variante des erfindungsgemäßen Endgeräts ergibt sich, wenn das Endgerät derart ausgebildet ist, dass es nun selbst durch den Prozessor auf der Chipkarte gesteuert wird. Damit können die Endgeräte auf ein Minimum an technischen Aufwand reduziert werden. Sie benötigen nämlich keinen eigenen Prozessor, keinen eigenen Speicher, etc.

Ein weiterer Aspekt des erfindungsgemäßen Endgeräts besteht darin, eine Schnittstelle, insbesondere eine Kabel- und/oder Infrarot- und/oder Funkschnittstelle vorzusehen, über welche direkt über das Chipkartenlesegerät mit der Chipkarte kommuniziert werden kann. Damit kann der Chipkarte unmittelbar ein Programm oder sonstige Daten übertragen werden, die zur Steuerung des zu steuernden Endgeräts erforderlich sind.

Als besonders vorteilhaft erweist sich, wenn das Endgerät einen zum Prozessor auf der Chipkarte parallelen Prozessor zur Arbeitsteilung aufweist. Durch die Verwendung wenigstens eines zusätzlichen Prozessors, besonders dann wenn er im Endgerät vorgesehen ist, wird die Verarbeitungsgeschwindigkeit erhöht. Die Steuerung kann dadurch umfassender und effizienter ausgebildet sein.

Weitere Vorteile ergeben sich aus dem Gegenstand der Unteransprüche sowie der Zeichnung mit der dazugehörigen Beschreibung.

### Kurze Beschreibung der Zeichnung

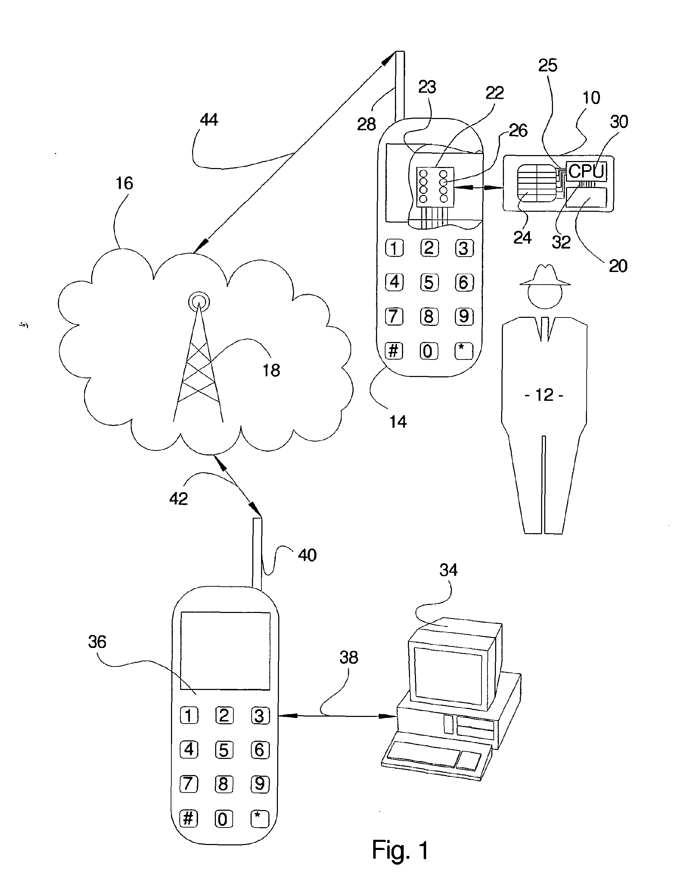

- Fig. 1: zeigt in einer schematischen Prinzipskizze eine Anordnung mit einer erfindungsgemäßen Chipkarte.

### Bevorzugtes Ausführungsbeispiel

In Fig. 1 wird mit 10 eine Chipkarte bezeichnet. Die Chipkarte 10 ist im vorliegenden Ausführungsbeispiel als SIM-Karte (= Subscriber Identity Module) ausgebildet. Die Chipkarte 10 dient in diesem Beispiel insbesondere dazu, einen Mobilfunkteilnehmer 12 mit seinem Mobilfunkendgerät 14 in ein Mobilfunknetz 16 einzubuchen. Symbolisch wird das Mobilfunknetz 16 durch einen Funkmasten 18 dargestellt. Die auf der Chipkarte 10 enthaltenen Daten, welche in einem Speicher 20 der Chipkarte 10 abgelegt sind, werden dabei für das Mobilfunknetz 16 zur Identifizierung und Authentifizierung des Mobilfunkteilnehmers 12 herangezogen. Das Mobilfunkendgerät 14 verfügt über einen Chipkartenleser 22. Die Chipkarte 10 wird zur Nutzung des Mobilfunkendgeräts 14 seitlich in den Chipkartenleser 22 eingeführt. Bei dem Mobilfunkendgerät 14 ist ein Stück 23 herausgebrochen, um den Chipkartenleser 22 sichtbar zu machen.

Die Chipkarte 10 weist Kontaktflächen 24 auf, die mit komplementären Kontakten 26 des Chipkartenlesers 22 in Berührung stehen. Dadurch können Daten zwischen der Chipkarte 10 und dem Mobilfunkendgerät 14 über den Chipkartenleser 22 ausgetauscht werden. Die Daten können über eine nicht dargestellte Steuereinheit des Mobilfunkendgeräts 14 verarbeitet werden. Die Steuereinheit enthält üblicherweise einen Prozessor und einen Speicher, in dem Programme und sonstige Daten abgelegt und abgearbeitet werden. Daten, wie beispielsweise die Identifikations- und/oder Authentifizierungsdaten können über eine Sende-/Empfangseinheit 28 an das Mobilfunknetz 16 beim Einbuchen übermittelt werden.

Die Chipkarte 10 weist neben dem Speicher 20 einen Prozessor 30 auf, der über einen Daten- und Steuerbus 32 direkt auf den Speicher 20 der Chipkarte 10 zugreifen kann. Über die Kontaktflächen 24 des Chipkartenlesers wird vom Mobilfunkendgerät 14 eine Verbindung 25 zum Prozessor 30 geschaffen. Der Prozessor 30 auf der Chipkarte 10 ist, weitestgehend ein "autarkes Rechnersystem". Im Speicher 20 der Chipkarte 10 abgespeicherte Daten und Programme können durch den Prozessor 30 abgearbeitet werden. Der Prozessor 30 läuft parallel zum Prozessor des Mobilfunkendgeräts 14. Grundsätzlich kann der Prozessor 30 auf der Chipkarte 10 auch die Rechnerleistung bzw. Steuerungsaufgaben des Prozessors des Mobilfunkendgeräts 14 übernehmen.

Die Programme, die der Prozessor 30 auf der Chipkarte 10 abarbeiten soll, können alternativ bereits bei der Herstellung der Chipkarte 10 oder nachträglich über ein Netz, insbesondere Mobilfunknetz 16, in den Speicher 20 übertragen werden. Die entsprechenden Daten können auch über eine dargestellte Infrarot- bzw. Funkschnittstelle, wie Bluetooth, übertragen werden. Aber auch eine herkömmliche, beispielsweise serielle, parallele oder USB-Kabelverbindung, eignet sich zur Datenübertragung auf die Chipkarte 10. Damit können dem Mobilfunkteilnehmer 12 Dienste angeboten werden, die unabhängig von seinem jeweils verwendeten Mobilfunkendgerät 14, auf seiner Chipkarte abgearbeitet wird.

Ein Personalcomputer 34 ist mit einem weiteren Mobilfunkendgerät 36 gekoppelt, Pfeil 38. Der Personalcomputer 34 ist ein Beispiel für ein Endgerät, welches mit Hilfe der Chipkarte 10 gesteuert wird. Grundsätzlichen können beliebige Endgeräte, wie Kühlschränke, Fernseher, Beleuchtung, Heizung oder sonstige Automaten über die Chipkarte 10 gesteuert oder Daten ausgetauscht werden. Das Mobilfunkendgerät 36 fungiert im vorliegenden Ausführungsbeispiel dabei als Vermittlungseinheit für das Mobilfunknetz 16. Der Personalcomputer 34 könnte theoretisch auch mit einem Modem über das Festnetz mit dem Mobilfunknetz gekoppelt sein.

Das Mobilfunkendgerät 36 weist ein Sende-/Empfangsteil 40 auf, um die von der Chipkarte 10 erzeugten Daten und Steuerungsdaten über das Mobilfunknetz 16 zu empfangen, Pfeil 42, oder Daten aus dem Personalcomputer 34 an die Chipkarte 10 zu übermitteln. Die Daten werden dazu zuvor von der Sende-/Empfangseinheit 28 des Mobilfunkendgeräts 14 an das Mobilfunknetz 16 gesandt, Pfeil 44, welches diese an das Mobilfunkendgerät 36 weiterleitet, so dass sie schließlich zum Personalcomputer 34 gelangen. Dieser lässt sich damit aus der Ferne durch die Chipkarte 10 steuern.

## Patentansprüche

1. Chipkarte (10), insbesondere SIM-Karte, mit einem integrierten Speicher (20) sowie einem Daten- und Steuerbus (32) mit einem Kontaktbereich (24) zum Austauschen von digitalen Daten über ein Chipkartenlesegerät (22) mit einem Mobilfunkendgerät (14), wobei die Chipkarte (10) einen Prozessor (30) zum Steuern weiterer Geräte (34) und/oder Geräteanordnungen (34, 36) über das Mobilfunkendgerät (14) enthält, **dadurch gekennzeichnet, dass** die Chipkarte (10) und der Prozessor (30) zum Steuern eines Kühlschranks, eines Fernsehers, einer Beleuchtung und/oder einer Heizung über ein Mobilfunknetz (16) ausgebildet sind, wobei der Kühlschrank, der Fernseher, die Beleuchtung oder die Heizung über ein Mobilfunkendgerät (36) oder über ein Modem und ein Festnetz mit dem Mobilfunknetz (16) gekoppelt sind, und wobei die Chipkarte (10) so ausgebildet ist, dass die durch eine USB-Kabelverbindung für die Chipkarte (10) übertragenen Programme und Daten, welche von dem Prozessor (30) der Chipkarte (10) zur Steuerung des Kühlschranks, des Fernsehers, der Beleuchtung und/oder der Heizung abgearbeitet werden, in den Speicher (20) übertragen werden.

2. Mobilfunkendgerät (14) mit einem Chipkartenlesegerät (22), mit dem der Speicher (20) einer Chipkarte (10), insbesondere einer SIM-Karte, gelesen oder beschrieben werden kann, und die Chipkarte (10) einen Prozessor (30) zum Steuern weiterer Geräte (34) und/oder Geräteanordnungen (34, 36) über das Mobilfunkendgerät (14) aufweist, **dadurch gekennzeichnet, dass** die Chipkarte (10) und der Prozessor (30) zum Steuern eines Kühlschranks, eines Fernsehers, einer Beleuchtung und/oder einer Heizung über ein Mobilfunknetz (16) ausgebildet sind, wobei der Kühlschrank, der Fernseher, die Beleuchtung oder die Heizung über ein Mobilfunkendgerät (36) oder über ein Modem und ein Festnetz mit dem Mobilfunknetz (16) gekoppelt sind, und wobei eine USB-Kabelverbindung für die Chipkarte (10) zum Übertragen von Programmen und Daten, welche von dem Prozessor (30) der Chipkarte (10) zur Steuerung des Kühlschranks,
des Fernsehers, der Beleuchtung und/oder der Heizung abgearbeitet werden, vorgesehen ist.

3. Mobilfunkendgerät (14) mit einem Chipkartenlesegerät (22), mit dem der Speicher (20) einer Chipkarte (10) gelesen oder beschrieben werden kann, nach Anspruch 2, **gekennzeichnet durch** eine Schnittstelle, insbesondere eine Kabel- und/oder Infrarot- und/oder Funkschnittstelle, über welche direkt über das Chipkartenlesegerät (22) mit der Chipkarte (10) kommuniziert wird.

4. Mobilfunkendgerät (14) mit einem Chipkartenlesegerät (22), mit dem der Speicher (20) einer Chipkarte (10) gelesen oder beschrieben werden kann, nach einem der Ansprüche 2 oder 3, **dadurch gekennzeichnet, dass** ein paralleler Prozessor im Mobilfunkendgerät (14) und/oder im Kühlschrank, im Fernseher, in der Beleuchtung und/oder in der Heizung (34) zur Arbeitsteilung vorgesehen ist.

5. Mobilfunkendgerät (14) mit einem Chipkartenlesegerät (22), mit dem der Speicher (20) einer Chipkarte (10) gelesen oder beschrieben werden kann, nach einem der Ansprüche 2 bis 4, **dadurch gekennzeichnet, dass** eine Schnittstelle, insbesondere eine Kabel- und/oder Infrarot- und/oder Funkschnittstelle zwischen dem Mobilfunkendgerät (14) und dem Kühlschrank, dem Fernseher, der Beleuchtung und/oder der Heizung (34) zum Datenaustausch vorgesehen ist.

6. Anordnung von wenigstens zwei Endgeräten (14, 34) zum Steuern des ersten Endgeräts (34) durch das zweite Endgerät (14), wobei
a) das erste Endgerät (14) eine Sende-/Empfangseinheit (28) und das zweite Endgerät (34) eine Sende-/Empfangseinheit (36, 40) enthält,
b) das erste Endgerät (14) ein Chipkartenlesegerät (22) enthält, welches eine Chipkarte (10), insbesondere eine SIM-Karte, lesen oder beschreiben kann,
c) ein Netzwerk (16) oder eine sonstige Verbindung, über welches das das erste Endgerät (14) mit dem zweiten Endgerät (34) Daten mittels der Sende- bzw. Empfangseinheit (36, 40) austauscht,
d) die Chipkarte (10) einen Prozessor (30) und ein Anweisungsskript in einem Speicher (20) zum Steuern des zweiten Endgeräts (34) über das erste Endgerät (14) aufweist, und
**dadurch gekennzeichnet, dass**
e) das Netzwerk (16) als ein Mobilfunknetz (16) und das erste Endgerät (14) als Mobilfunkendgerät ausgebildet ist,
f) das zweite Endgerät ein Kühlschrank, ein Fernseher, eine Beleuchtung oder eine Heizung ist, wobei der Kühlschrank, der Fernseher, die Beleuchtung oder die Heizung über ein Mobilfunkendgerät (36) oder über ein Modem und ein Festnetz mit dem Mobilfunknetz (16) gekoppelt ist,
g) die Chipkarte (10) und der Prozessor (30) zum Steuern des Kühlschranks, des Fernsehers, der Beleuchtung und/oder der Heizung über ein Mobilfunknetz (16) ausgebildet sind, und
h) eine USB-Kabelverbindung für die Chipkarte (10) zum Übertragen von Programmen und Daten, welche von dem Prozessor (30) der Chipkarte (10) zur Steuerung des Kühlschranks, des Fernsehers, der Beleuchtung oder der Heizung abgearbeitet werden, vorgesehen ist.

## Claims

1. A chip card (10), in particular a SIM card, having an integrated memory (20) and a data and control bus (32) with a contact region (24) for exchanging digital data via a chip card reader (22) with a mobile radio terminal (14) wherein the chip card (10) comprises a processor (30) for controlling further devices (34) and/or device assemblies (34, 36) via the mobile radio terminal (14), **characterized in that** the chip card (10) and the processor (30) are adapted for controlling a refrigerator, a television, a lighting and/or a heating via a mobile radio network (16), wherein the refrigerator, the television, the lighting or the heating are coupled to the mobile radio network (16) via a mobile radio terminal (36) or via a modem and a fixed network, and wherein the chip card (10) is configured so that programs and data which are transmitted via a USB wired connection for the chip card (10) and are processed by the processor (30) of the chip card (10) for controlling the refrigerator, the television, the lighting and/or the heating, are transferred into the memory (20).

2. A mobile radio terminal (14) having a chip card reader (22), with which the memory (20) of a chip card (10), in particular a SIM card, can be read or written, and the chip card (10) comprising a processor (30) for controlling further devices (34) and/or device assemblies (34, 36) via the mobile radio terminal (14), **characterized in that** the chip card (10) and the processor (30) are adapted for controlling a refrigerator, a television, a lighting and/or a heating via a mobile radio network (16), wherein the refrigerator, the television, the lighting or the heating are coupled to the mobile radio network (16) via a mobile radio terminal (36) or via a modem and a fixed network, and wherein a USB wired connection is provided for the chip card (10) for transmitting programs and data, which are processed by the processor (30) of the chip card (10) for controlling the refrigerator, the television, the lighting and/or the heating.

3. A mobile radio terminal (14) having a chip card reader (22) with which the memory (20) of a chip card (10) can be read or written, according to claim 2, **characterized by** an interface, in particular a cable and/or infrared and/or radio interface, via which communication with the chip card (10) is carried out over the chip card reader (22) immediately.

4. A mobile radio terminal (14) with a chip card reader (22), with which the memory (20) of a chip card (10) can be read or written, according to any one of claims 2 or 3, **characterized in that** a parallel processor in the mobile radio terminal (14) and/or in the refrigerator, in the television, in the lighting and/or in the heating (34) is provided for work-sharing.

5. A mobile radio terminal (14) with a chip card reader (22), with which the memory (20) of a chip card (10) can be read or written, according to any one of claims 2 to 4, **characterized in that** an interface, in particular a cable and/or infrared and/or radio interface, is provided between the mobile radio terminal (14) and the refrigerator, the television, the lighting and/or the heating (34) for data exchange.

6. Arrangement of at least two terminals (14, 34) for controlling the first terminal (34) by the second terminal (14), wherein
a) the first terminal (14) comprises a transceiver unit (28) and the second terminal (34) comprises a transceiver unit (36, 40),
b) the first terminal (14) comprises a chip card reader (22), which can read or write on a chip card (10), in particular a SIM card,
c) a network (16) or any other connection, via which the first terminal (14) exchanges data with the second terminal (34) by means of the transceiver unit (36, 40),
d) the chip card (10) comprises a processor (30) and an instruction script in a memory (20) for controlling the second terminal (34) via the first terminal (14), and
**characterized in that**
e) the network (16) is designed as a mobile radio network (16) and the first terminal (14) is designed as a mobile radio terminal,
f) the second terminal is a refrigerator, a television, a lighting or a heating, wherein the refrigerator, the television, the lighting or the heating is coupled to the mobile radio network (16) via a mobile radio terminal (36) or via a modem and a fixed network work,
g) the chip card (10) and the processor (30) are adapted for controlling the refrigerator, the television, the lighting and/or the heating via a mobile radio network (16), and
h) a USB wired connection is provided for the chip card (10) for transferring of programs and data which are processed by the processor (30) of the chip card (10) for controlling the refrigerator, the television, the lighting or the heating.

## Revendications

1. Carte à puce (10), notamment carte SIM, munie d'une mémoire intégrée (20) ainsi que d'un bus de commande et de données (32) muni d'une zone de contact (24) destinée à l'échange de données numériques par le biais d'un lecteur de cartes à puce (22) avec un terminal de radiotéléphonie mobile (14), la carte à puce (10) comprenant un processeur (30) destiné à commander d'autres appareils (34) et/ou des dispositions d'appareils (34, 36) par le biais du terminal de radiotéléphonie mobile (14), **caractérisée en ce que** la carte à puce (10) et le processeur (30) sont réalisés de manière à commander un réfrigérateur, un téléviseur, un éclairage et/ou un dispositif de chauffage par le biais d'un réseau de radiotéléphonie mobile (16), le réfrigérateur, le téléviseur, l'éclairage ou le dispositif de chauffage étant couplés au réseau de radiotéléphonie mobile (16) par le biais d'un terminal de radiotéléphonie mobile (36) ou d'un modem et d'un réseau fixe, la carte à puce (10) étant réalisée de telle manière que les programmes et les données transmis par une connexion câblée USB destinée à la carte à puce (10) et traités par le processeur (30) de la carte à puce (10) afin de commander le réfrigérateur, le téléviseur, l'éclairage et/ou le dispositif de chauffage sont transmis à la mémoire (20).

2. Terminal de radiotéléphonie mobile (14) muni d'un lecteur de cartes à puce (22) permettant la lecture et l'écriture de la mémoire (20) d'une carte à puce (10), notamment d'une carte SIM, et la carte à puce (10) présentant un processeur (30) destiné à commander d'autres appareils (34) et/ou des dispositions d'appareils (34, 36) par le biais du terminal de radiotéléphonie mobile (14), **caractérisé en ce que** la carte à puce (10) et le processeur (30) sont réalisés de manière à commander un réfrigérateur, un téléviseur, un éclairage et/ou un dispositif de chauffage par le biais d'un réseau de radiotéléphonie mobile (16), le réfrigérateur, le téléviseur, l'éclairage ou le dispositif de chauffage étant couplés au réseau de radiotéléphonie mobile (16) par le biais d'un terminal de radiotéléphonie mobile (36) ou d'un modem et d'un réseau fixe, une connexion câblée USB destinée à la carte à puce (10) pour la transmission de programmes et de données traités par le processeur (30) de la carte à puce (10) afin de commander le réfrigérateur, le téléviseur, l'éclairage et/ou le dispositif de chauffage étant prévue.

3. Terminal de radiotéléphonie mobile (14) muni d'un lecteur de cartes à puce (22) permettant la lecture et l'écriture de la mémoire (20) d'une carte à puce (10), **caractérisé par** une interface, notamment une interface câblée et/ou infrarouge et/ou radio permettant de communiquer directement avec la carte à puce (10) par le biais du lecteur de cartes à puce (22).

4. Terminal de radiotéléphonie mobile (14) muni d'un lecteur de cartes à puce (22) permettant la lecture et l'écriture de la mémoire (20) d'une carte à puce (10), selon l'une quelconque des revendications 2 ou 3, **caractérisé en ce qu'**un processeur parallèle est prévu dans le terminal de radiotéléphonie mobile (14) et/ou le réfrigérateur, le téléviseur, l'éclairage et/ou le dispositif de chauffage (34) en vue de la division des tâches de travail.

5. Terminal de radiotéléphonie mobile (14) muni d'un lecteur de cartes à puce (22) permettant la lecture et l'écriture de la mémoire (20) d'une carte à puce (10), selon l'une quelconque des revendications 2 à 4, **caractérisé en ce qu'**une interface, notamment une interface câblée et/ou infrarouge et/ou radio, est prévue pour l'échange de données entre le terminal de radiotéléphonie mobile (14) et le réfrigérateur, le téléviseur, l'éclairage et/ou le dispositif de chauffage (34) .

6. Disposition d'au moins deux terminaux (14, 34) destinée à la commande du premier terminal (34) par le second terminal (14),
(a) le premier terminal (14) comprenant une unité d'émission/réception (28) et le second terminal (34) comprenant une unité d'émission/réception (36, 40),
(b) le premier terminal (14) comprenant un lecteur de cartes à puce (22) permettant la lecture et l'écriture d'une carte à puce (10), notamment une carte SIM,
(c) un réseau (16) ou une connexion quelconque permettant au premier terminal (14) d'échanger des données avec le second terminal (34) au moyen de l'unité d'émission ou de réception (36, 40),
(d) la carte à puce (10) présentant un processeur (30) et un instruction script dans une mémoire (20) en vue de commander le second terminal (34) par le biais du premier terminal (14), et
**caractérisée en ce que**
(e) le réseau (16) est réalisé sous forme de réseau de radiotéléphonie mobile (16) et le premier terminal (14) sous forme de terminal de radiotéléphonie mobile,
(f) le second terminal est un réfrigérateur, un téléviseur, un éclairage ou un dispositif de chauffage, le réfrigérateur, le téléviseur, l'éclairage ou le chauffage étant couplés au réseau de radiotéléphonie mobile (16) par le biais d'un terminal de radiotéléphonie mobile (36) ou par le biais d'un modem et d'un réseau fixe,
(g) la carte à puce (10) et le processeur (30) sont réalisés de manière à commander le réfrigérateur, le téléviseur, l'éclairage et/ou le dispositif de chauffage par le biais d'un réseau de radiotéléphonie mobile (16), et
(h) une connexion câblée USB destinée à la carte à puce (10) est prévue pour la transmission de programmes et de données traités par le processeur (30) de la carte à puce (10) afin de commander le réfrigérateur, le téléviseur, l'éclairage ou le dispositif de chauffage.
